# EUROPEAN PATENT APPLICATION

(11) **EP 4 560 731 A1**
(43) Date of publication of application: **28.05.2025**
(21) Application number: 22959809.9
(22) Date of filing: 27.09.2022
(51) Int. Cl.: H01M 4/52, H01M 4/62, H01M 10/0525

(54) **POSITIVE ELECTRODE ACTIVE MATERIAL AND PREPARATION METHOD THEREFOR, POSITIVE ELECTRODE PLATE, SECONDARY BATTERY, BATTERY MODULE, BATTERY PACK, AND ELECTRIC DEVICE**

(71) Applicant: CONTEMPORARY AMPEREX TECHNOLOGY (HONG KONG) LIMITED, Central (HK)
(72) Inventor: SHEN, Chongheng, Ningde City, Fujian 352100 (CN); HUAN, Shuxing, Ningde City, Fujian 352100 (CN); WU, Qi, Ningde City, Fujian 352100 (CN); CHEN, Qiang, Ningde City, Fujian 352100 (CN); LIU, Na, Ningde City, Fujian 352100 (CN)
(74) Representative: Gong, Jinping
(86) International application number: PCT/CN2022/121607
(87) International publication number: WO 2024/065157

(57) **Abstract**

The present application provides a positive electrode active material comprising a matrix material and a coating layer on the surface of the matrix material, wherein the matrix material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a; and the coating layer is a boron-containing ternary alloy or a boron-containing ternary alloy oxide. The positive electrode active material of the present application has a high compacted density and an improved high-temperature storage performance and safety performance. The present application further provides a method for preparing the positive electrode active material, a positive electrode plate comprising the positive electrode active material, a secondary battery, a battery module, a battery pack and a power consuming device.

## Description

### Technical Field

The present application relates to the technical field of lithium batteries, in particular to a positive electrode active material and a preparation method therefor, a positive electrode plate comprising the positive electrode active material, a secondary battery, a battery module, a battery pack, and a power consuming device.

### Background Art

In recent years, with an increasingly wide application range of lithium-ion batteries, the lithium ion batteries are widely used in energy storage power systems such as hydroelectric, thermal, wind and solar power stations, as well as power tools, electric bicycles, electric motorcycles, electric vehicles, military equipment, aerospace and other fields. Due to the great development of lithium ion batteries, higher requirements have also been placed on the lithium ion batteries in terms of energy density, cycling performance, safety performance, etc.

A positive electrode material is an important part of a lithium ion battery. Currently, common positive electrode materials include layered-structure materials (e.g., lithium cobaltate, lithium manganate, lithium nickelate, etc.), spinel-structure materials, polyanionic materials, high-nickel positive electrode materials, etc. High-nickel positive electrode materials have received increasing attention due to their high energy density, low cost, and reliable safety. The high-nickel positive electrode materials have a significantly improved energy density compared to other materials, but as the nickel content increases, the thermal decomposition temperature of the materials decreases, resulting in a poor cycling stability and thermal stability thereof; therefore, a cell comprising same has a short service life and safety risks, which to some extent hinders the further development of high-nickel positive electrode materials. Therefore, some strategies are required to optimize the high-nickel positive electrode materials, in order to improve the high-temperature storage performance and safety performance of a battery while increasing the energy density of the battery.

### Summary of the Invention

The present application has been made in view of the above problems, and an objective thereof is to provide a positive electrode active material having a high compacted density and an improved high-temperature storage performance and safety performance, and provide a preparation method therefor, a positive electrode plate comprising same, a secondary battery, a battery module, a battery pack and a power consuming device.

In order to achieve the above objective, a first aspect of the present application provides a positive electrode active material comprising a matrix material and a coating layer on the surface of the matrix material, wherein
the matrix material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a, and
the coating layer is a boron-containing ternary alloy or a boron-containing ternary alloy oxide.

Thus, compared with the prior art, the present application comprises at least the following beneficial effects: 1) the positive electrode active material of the present application has a good dispersity, a high filling degree between particles, a good material processability, and a high compacted density, which can effectively increase the energy density of a battery; and 2) the positive electrode active material of the present application has an improved surface-structure stability, which improves the high-temperature storage performance and safety performance of a battery.

In any embodiment, the boron-containing ternary alloy is represented by formula I: B-X1-X2 (I), wherein X1 and X2 are, independently of each other, selected from one of the following elements: cobalt, hafnium, niobium, titanium, zirconium, tungsten, aluminum, molybdenum and copper; and the boron-containing ternary alloy oxide is represented by formula II: B-Y1-Y2-O (II), wherein Y1 and Y2 are, independently of each other, selected from one of the following elements: cobalt, hafnium, niobium, titanium, zirconium, tungsten, aluminum, molybdenum and copper. When the coating layer is a boron-containing ternary alloy represented by formula I or boron-containing ternary alloy oxide represented by formula II described above, the surface-structure stability of the material can be improved, thereby improving the high-temperature storage performance and safety performance of a battery.

In any embodiment, the positive electrode active material satisfies: 1.30 ≤ (Dv90-Dv10)/Dv50 ≤ 2.10. As the positive electrode active material satisfies the range above, it has a good dispersity, a high filling degree between particles, a good material processability, and a high compacted density, which enables a battery to have a high energy density.

In any embodiment, the amount of the coating layer is 500 ppm - 20000 ppm, and optionally the amount of the coating layer is 4000-15000 ppm, based on the weight of the matrix material. When the amount of the coating layer is in the ranges above, the surface-structure stability of a high-nickel material can be effectively improved, such that the high-temperature storage performance and the safety performance of a battery are improved.

In any embodiment, the boron-containing ternary alloy is selected from at least one of boron-cobalt-hafnium, boron-cobalt-niobium, boron-cobalt-titanium, boron-cobalt-zirconium, boron-cobalt-tungsten, boron-cobalt-aluminum, boron-cobalt-molybdenum, boron-cobalt-copper, and boron-hafnium-titanium, and optionally the boron-containing ternary alloy is selected from at least one of boron-cobalt-hafnium, boron-cobalt-niobium, boron-cobalt-titanium, boron-cobalt-tungsten, boron-cobalt-aluminum, and boron-hafnium-titanium. When the boron-containing ternary alloys above are selected for surface and grain boundary coating, the surface-structure stability of the material can be improved, thereby improving the high-temperature storage performance and safety performance of a battery.

In any embodiment, the boron-containing ternary alloy oxide is selected from at least one of a boron-cobalt-hafnium oxide, a boron-cobalt-niobium oxide, a boron-cobalt-titanium oxide, a boron-cobalt-zirconium oxide, a boron-cobalt-tungsten oxide, a boron-cobalt-aluminum oxide, a boron-cobalt-molybdenum oxide, a boron-cobalt-copper oxide, and a boron-hafnium-titanium oxide, and optionally the boron-containing ternary alloy oxide is selected from at least one of a boron-cobalt-hafnium oxide, a boron-cobalt-niobium oxide, a boron-cobalt-titanium oxide, a boron-cobalt-tungsten oxide, a boron-cobalt-aluminum oxide, and a boron-hafnium-titanium oxide. When the boron-containing ternary alloy oxides above are selected for surface and grain boundary coating, the surface-structure stability of the material can be improved, thereby improving the high-temperature storage performance and safety performance of a battery.

In any embodiment, the molar ratio of boron, X1 to X2 in the boron-containing ternary alloy is 1 : 0.5 : 0.04 - 1 : 5 : 4, optionally 1 : 0.5 : 0.15 - 1 : 1 : 0.4. When the molar ratio of the elements in the boron-containing ternary alloy satisfies the ranges above, the surface-structure stability of the material can be improved, thereby improving the high-temperature storage performance and safety performance of a battery.

In any embodiment, the molar ratio of boron, Y1 to Y2 in the boron-containing ternary alloy oxide is 1 : 0.5 : 0.03 - 1 : 5 : 5, optionally 1 : 0.5 : 0.15 - 1 : 1 : 0.4. When the molar ratio of the elements in the boron-containing ternary alloy oxide satisfies the ranges above, the surface-structure stability of the material can be improved, thereby improving the high-temperature storage performance and safety performance of a battery.

In any embodiment, the positive electrode active material has a Dv50 of 6 µm - 18 µm, optionally 9 µm - 13 µm. As the positive electrode active material has a Dv50 in the ranges above, the compacted density thereof can be optimized, thus enabling a battery to have a high energy density.

In any embodiment, the positive electrode active material has a compacted density of 3.65-3.75 g/cm³ under a pressure of 5 tons (i.e., 5 T). The positive electrode active material has a high compacted density and a high filling degree between particles, which is not only beneficial for improving the processability of the positive electrode active material, but also can effectively increase the energy density of a battery.

A second aspect of the present application provides a method for preparing a positive electrode active material in the first aspect of the present application, comprising
S1) preparing a matrix material;
S2) mixing the matrix material, a boron-containing compound and a metal elementary substance at a mass ratio of 1 : 0.004-0.02 : 0.0001-0.2, or mixing the matrix material, a boron-containing compound and a metal oxide at a mass ratio of 1 : 0.004-0.02 : 0.0002-0.018, and then sintering same under an inert atmosphere or oxygen atmosphere to obtain an intermediate material; and
S3) washing the intermediate material with water, followed by centrifugation, filtration and then vibration drying to obtain the positive electrode active material,
wherein the matrix material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a.

Thus, the positive electrode active material prepared by the method above has a good dispersity, a high filling degree between particles, a good material processability, a high compacted density, and thus an improved surface-structure stability, such that a secondary battery prepared therefrom has an improved high-temperature storage performance and safety performance.

In any embodiment, the boron-containing compound is one or more selected from cobalt boride, hafnium boride, niobium boride, titanium boride, zirconium boride, tungsten boride, aluminum boride, molybdenum boride, and copper boride, and/or the metal elementary substance is one or more selected from cobalt, hafnium, niobium, titanium, zirconium, tungsten, aluminum, molybdenum and copper, and/or the metal oxide is one or more selected from cobalt oxide, hafnium oxide, niobium oxide, titanium oxide, zirconium oxide, tungsten oxide, aluminum oxide, molybdenum oxide, and copper oxide. When the boron-containing compound, metal elementary substance and metal oxide are respectively selected from the materials above, the surface-structure stability of the material can be improved, thereby improving the high-temperature storage performance and safety performance of a battery.

In any embodiment, the matrix material prepared in step S1) has a (Dv90 - Dv10)/Dv50 ≥ 1.2, optionally (Dv90 - Dv10)/Dv50 ≥ 1.25. When the particle size distribution of the matrix material satisfies the ranges above, a positive electrode active material having a good dispersity, a high filling degree between particles and a good material processability can be obtained.

In any embodiment, in step S2), the matrix material, a boron-containing compound and a metal elementary substance are mixed under an inert atmosphere and sintered under an inert atmosphere, wherein the sintering temperature is 300-700°C, optionally 300-550°C, and the sintering time is 3-10 h, optionally 5-10 h. Thus, a positive electrode active material coated with a boron-containing ternary alloy can be obtained, such that the surface-structure stability of the material is improved, which improves the high-temperature storage performance and safety performance of a battery.

In any embodiment, in step S2), the matrix material, a boron-containing compound and a metal oxide are sintered under an oxygen atmosphere, wherein the sintering temperature is 300-700°C, optionally 550-650°C, and the sintering time is 3-10 h, optionally 3-8 h. Thus, a positive electrode active material coated with a boron-containing ternary alloy oxide can be obtained, such that the surface-structure stability of the material is improved, which improves the high-temperature storage performance and safety performance of a battery.

In any embodiment, in step S3), the mass ratio of the intermediate material to water is 1 : 1 - 1 : 5, the duration of water washing is 1-10 min, the vibration frequency of the vibration drying is 10-50 Hz, and the drying time is 2-8 h. Thus, a positive electrode active material having a good dispersity, a high filling degree between particles and a good material processability can be obtained.

A third aspect of the present application provides a positive electrode plate comprising a positive electrode current collector and a positive electrode film layer provided on at least one surface of the positive electrode current collector, wherein the positive electrode film layer comprises a first positive electrode active material, the first positive electrode active material is a positive electrode active material in the first aspect of the present application or a positive electrode active material prepared by the method in the second aspect of the present application, and the content of the first positive electrode active material in the positive electrode film layer is 10 wt% or more, based on the total weight of the positive electrode film layer. Thus, the processability of the electrode plate can be improved.

In any embodiment, the positive electrode film layer further comprises a second positive electrode active material, and the ratio in amount of the first positive electrode active material to the second positive electrode active material is 6 : 4 - 8 : 2, optionally 6.5 : 3.5 - 7.5 : 2.5; the second positive electrode active material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a; and the second positive electrode active material has a Dv50 of 2 µm - 5 µm, optionally 2.5 µm - 3.5 µm. Thus, the processability of the electrode plate can be further improved.

In any embodiment, the tap density of the second positive electrode active material is ≤ 1.8 g/cm³, optionally 1.2-1.5 g/cm³. Thus, the processability of the electrode plate can be further improved.

A fourth aspect of the present application provides a secondary battery, comprising a positive electrode plate in the third aspect of the present application.

A fifth aspect of the present application provides a battery module, comprising a secondary battery in the fourth aspect of the present application.

A sixth aspect of the present application provides a battery pack, comprising a battery module in the fifth aspect of the present application.

A seventh aspect of the present application provides a power consuming device, comprising at least one selected from a secondary battery in the fourth aspect of the present application, a battery module in the fifth aspect of the present application, or a battery pack in the sixth aspect of the present application.

The battery module, the battery pack, and the power consuming device of the present application comprise the secondary battery provided by the present application, and thus have at least the same advantages as the secondary battery.

### Brief Description of the Drawings

Fig. 1 shows a schematic diagram of a secondary battery according to an embodiment of the present application.
Fig. 2 shows an exploded view of the secondary battery according to an embodiment of the present application as shown in Fig. 1.
Fig. 3 shows a schematic diagram of a battery module according to an embodiment of the present application.
Fig. 4 shows a schematic diagram of a battery pack according to an embodiment of the present application.
Fig. 5 shows an exploded view of the battery pack according to an embodiment of the present application as shown in Fig. 4.
Fig. 6 shows a schematic diagram of a power consuming device using a secondary battery according to an embodiment of the present application as a power source.

### Description of reference signs:

1 - battery pack; 2 - upper box body; 3 - lower box body; 4 - battery module; 5 - secondary battery; 51 - housing; 52 - electrode assembly; 53 - top cover assembly

### Detailed Description of Embodiments

Hereinafter, embodiments of the positive electrode active material and the preparation method therefor, the positive electrode plate, the secondary battery, the battery module, the battery pack, and the electrical device of the present application of the present application are described in detail and specifically disclosed with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in the claims.

The "ranges" disclosed in the present application are defined in the form of lower and upper limits. A given range is defined by selecting a lower limit and an upper limit, and the selected lower and upper limits defining the boundaries of the particular range. Ranges defined in this manner may be inclusive or exclusive, and may be arbitrarily combined, that is, any lower limit may be combined with any upper limit to form a range. For example, if the ranges 60-120 and 80-110 are listed for a particular parameter, it should be understood that the ranges 60-110 and 80-120 are also contemplated. Additionally, if minimum range values 1 and 2 are listed and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all the real numbers between "0-5" have been listed herein, and "0-5" is just an abbreviated representation of combinations of these numerical values. In addition, when a parameter is expressed as an integer ≥ 2, it is equivalent to disclosing that the parameter is, for example, an integer of 2, 3, 4, 5, 6, 7, 8, 9, 10, 11, 12, etc.

All the embodiments and optional embodiments of the present application can be combined with one another to form new technical solutions, unless otherwise stated.

All the technical features and optional technical features of the present application can be combined with one another to form a new technical solution, unless otherwise stated.

Unless otherwise stated, all the steps of the present application may be performed sequentially or randomly, preferably sequentially. For example, the method comprising steps (a) and (b) indicates that the method may comprise steps (a) and (b) performed sequentially, or may also comprise steps (b) and (a) performed sequentially. For example, reference to "the method may further comprise step (c)" indicates that step (c) may be added to the method in any order, e.g., the method may comprise steps (a), (b), and (c), steps (a), (c), and (b), or also steps (c), (a), and (b), etc.

The terms "comprise" and "include" mentioned in the present application are open-ended or may also be closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, the condition "A or B" is satisfied by any one of the following: A is true (or present) and B is false (or not present); A is false (or not present) and B is true (or present); or both A and B are true (or present).

Despite significant progress in research on high-nickel positive electrode materials in recent years, there are still many problems that need to be solved urgently: 1) During the cycling of a high-nickel positive electrode material, the mixed arrangement of Ni²⁺ and Li⁺ occurs and Ni²⁺ occupies the positions for Li⁺, which makes it impossible for Li⁺ to be intercalated in the lithium layer during the discharge of the material, resulting in a capacity loss and reduced rate performance of the material; 2) Ni⁴⁺ is prone to be transferred into Ni³⁺ due to the reducibility thereof; and in order to maintain a charge balance, oxygen is released from the material, leading to a structural damage, reduced thermal stability, and poor high-temperature storage performance of the material; and 3) due to the influence of kinetic factors on the diffusion of Li⁺, the amount of de-intercalated Li increases, such that the transition metal ions are reduced and the material has a tendency to form new phases and pores on the surface thereof in order to maintain its electrical neutrality, leading to the instability of the structure of the high-nickel positive electrode materials, which is accelerated under an overcharging condition; and moreover, the deterioration of the structural stability of the material is accompanied by a partial structural transformation towards spinel-type and NiO-type rock salt phases and the generation of oxygen, resulting in certain safety hazards of batteries. Currently, methods such as surface coating and ion doping are used to improve the electrochemical performance of a high-nickel positive electrode material. The precipitated oxygen occurred during the cycling of a high-nickel positive electrode material not only oxidizes an organic electrolyte and forms gases, but also leads to cationic reduction and/or densification, which may further initiate other degradation processes by means of chain reactions. Although thin coating with high stability and catalytic inertness is beneficial for the surface oxygen stability of a high-nickel positive electrode material, it is often difficult to achieve a 100% coverage in the synthesis process due to the poor wettability between solids and the need to maintain a conformability during the electrochemical cycling.

In view of the above-mentioned problems, the present application provides a positive electrode active material comprising a matrix material and a coating layer on the surface of the matrix material, wherein
the matrix material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a, and
the coating layer is a boron-containing ternary alloy or a boron-containing ternary alloy oxide.

Although the mechanism is not yet clear, the applicant has unexpectedly discovered that For the positive electrode active material provided by the present application, a boron-containing ternary alloy or a boron-containing ternary alloy oxide is used to achieve dual coating effects of both the surface and the grain boundaries of a matrix material, which greatly improves the stability of the surface structure of the material, thus improving the storage stability and safety of the material; and moreover, the positive electrode active material of the present application has a good dispersity, a high filling degree between particles, a good material processability, and a high compacted density, which can effectively increase the energy density of a battery. In the present application, the matrix material is secondary particles composed of primary particles. A boron-containing ternary alloy or a boron-containing ternary alloy oxide is tightly bonded to and fully covered the matrix material by means of high-quality wetting construction, and the coating formed not only covers the surface of the secondary particles but also locates at the grain boundaries of the primary particles, which achieves an all-round coating of the surface and grain boundaries of the polycrystalline matrix material, such that the intergranular stress corrosion cracking, microstructure degradation and side reactions on the positive electrode side and the crossing effect of transition metals on the negative electrode side can be alleviated and the gas production of the material is greatly reduced, thereby enabling a positive electrode active material to have a more stable structure and also significantly improved thermal stability and safety, and thus improved high-temperature storage performance and safety performance.

In the present application, unless otherwise stated, in the chemical formula of the matrix material, when the M comprises two or more elements, the above definition of the numerical range of a not only represents a definition of the stoichiometric number of each element as M, but also represents a definition of the sum of the stoichiometric numbers of the elements as M. That is, when M is two or more of elements M1, M2...Mn, the respective stoichiometric numbers a1, a2...an of M1, M2...Mn fall within the numerical range of a defined in the present application, and the sum of a1, a2...an also falls within this numerical range; and when M' is two or more elements, the definition of the numerical range of the stoichiometric number of M' in the present application also has the above meaning.

In the present application, the Dv10 is the corresponding particle size when the cumulative percentage by volume of a sample reaches 10%, the Dv50 is the corresponding particle size when the cumulative percentage by volume of a sample reaches 50%, and the Dv90 is the corresponding particle size when the cumulative percentage by volume of a sample reaches 90%; and the dispersity of the material can be calculated according to (Dv90 - Dv10)/Dv50.

In some embodiments, the boron-containing ternary alloy is represented by formula I: B-X1-X2 (I), wherein X1 and X2 are, independently of each other, selected from one of the following elements: cobalt, hafnium, niobium, titanium, zirconium, tungsten, aluminum, molybdenum and copper; and the boron-containing ternary alloy oxide is represented by formula II: B-Y1-Y2-O (II), wherein Y1 and Y2 are, independently of each other, selected from one of the following elements: cobalt, hafnium, niobium, titanium, zirconium, tungsten, aluminum, molybdenum and copper. When the coating layer is a boron-containing ternary alloy represented by formula I or boron-containing ternary alloy oxide represented by formula II described above, the surface-structure stability of the material can be improved, thereby improving the high-temperature storage performance and safety performance of a battery.

In some embodiments, the positive electrode active material satisfies: 1.30 ≤ (Dv90 - Dv10)/Dv50 ≤ 2.10. As the positive electrode active material satisfies the range above, it has a good dispersity, a high filling degree between particles, a good material processability, and a high compacted density, which enables a battery to have a high energy density.

In some embodiments, the amount of the coating layer is 500 ppm - 20000 ppm, and optionally the amount of the coating layer is 4000-15000 ppm, based on the weight of the matrix material. For example, the amount of the coating layer may be 500 ppm, 2000 ppm, 4000 ppm, 10000 ppm, 15000 ppm, 17000 ppm, or 20000 ppm. When the amount of the coating layer is in the ranges above, it can achieve a coating effect of uniformly wetting the surface and grain boundaries of the material, such that the surface-structure stability of the material is improved, thereby improving the high-temperature storage performance and safety performance of a battery. If the amount of the coating layer is too small, it cannot form a good coating outside the material and cannot effectively improve the surface-structure stability of the material; and if the amount of the coating layer is too much, island-like depositions will be formed, resulting in a decrease in the capacity per gram of the material and an increase in the DCR of a cell.

In some embodiments, the boron-containing ternary alloy is selected from at least one of boron-cobalt-hafnium, boron-cobalt-niobium, boron-cobalt-titanium, boron-cobalt-zirconium, boron-cobalt-tungsten, boron-cobalt-aluminum, boron-cobalt-molybdenum, boron-cobalt-copper, and boron-hafnium-titanium, and optionally the boron-containing ternary alloy is selected from at least one of boron-cobalt-hafnium, boron-cobalt-niobium, boron-cobalt-titanium, boron-cobalt-tungsten, boron-cobalt-aluminum, and boron-hafnium-titanium. When the boron-containing ternary alloys above are selected for surface and grain boundary coating, the surface-structure stability of the material can be improved, thereby improving the high-temperature storage performance and safety performance of a battery.

In some embodiments, the boron-containing ternary alloy oxide is selected from at least one of a boron-cobalt-hafnium oxide, a boron-cobalt-niobium oxide, a boron-cobalt-titanium oxide, a boron-cobalt-zirconium oxide, a boron-cobalt-tungsten oxide, a boron-cobalt-aluminum oxide, a boron-cobalt-molybdenum oxide, a boron-cobalt-copper oxide, and a boron-hafnium-titanium oxide, and optionally the boron-containing ternary alloy oxide is selected from at least one of a boron-cobalt-hafnium oxide, a boron-cobalt-niobium oxide, a boron-cobalt-titanium oxide, a boron-cobalt-tungsten oxide, a boron-cobalt-aluminum oxide, and a boron-hafnium-titanium oxide. When the boron-containing ternary alloy oxides above are selected for surface and grain boundary coating, the surface-structure stability of the material can be improved, thereby improving the high-temperature storage performance and safety performance of a battery.

In some embodiments, the molar ratio of boron, X1 and X2 in the boron-containing ternary alloy is 1 : 0.5 : 0.04 - 1 : 5 : 4, optionally 1 : 0.5 : 0.15 - 1 : 1 : 0.4. When the molar ratio of the elements in the boron-containing ternary alloy satisfies the ranges above, the surface-structure stability of the material can be improved, thereby improving the high-temperature storage performance and safety performance of a battery.

In some embodiments, the molar ratio of boron, Y1 and Y2 in the boron-containing ternary alloy oxide is 1 : 0.5 : 0.03 - 1 : 5 : 5, optionally 1 : 0.5 : 0.15 - 1 : 1 : 0.4. When the molar ratio of the elements in the boron-containing ternary alloy oxide satisfies the ranges above, the surface-structure stability of the material can be improved, thereby improving the high-temperature storage performance and safety performance of a battery.

In some embodiments, the positive electrode active material has a Dv50 of 6 µm - 18 µm, optionally 9 µm - 13 µm. As the positive electrode active material has a Dv50 in the ranges above, the compacted density thereof can be optimized, thus enabling a battery to have a high energy density.

In some embodiments, the positive electrode active material has a compacted density of 3.65-3.75 g/cm³ under a pressure of 5 T. A higher compacted density indicates a greater weight of the active material per unit volume, and thus, increasing the compacted density is beneficial for increasing the volumetric energy density of a cell. The positive electrode active material has a high compacted density and a high filling degree between particles, which is not only beneficial for further improving the processability of the positive electrode active material, but also can further increase the energy density of a battery. The compacted density may be measured in accordance with GB/T 24533-2009.

A second aspect of the present application provides a method for preparing a positive electrode active material in the first aspect of the present application, comprising
S1) preparing a matrix material;
S2) mixing the matrix material, a boron-containing compound and a metal elementary substance at a mass ratio of 1 : 0.004-0.02 : 0.0001-0.2, or mixing the matrix material, a boron-containing compound and a metal oxide at a mass ratio of 1 : 0.004-0.02 : 0.0002-0.018, and then sintering same under an inert atmosphere or oxygen atmosphere to obtain an intermediate material; and
S3) washing the intermediate material with water, followed by centrifugation, filtration and then vibration drying to obtain the positive electrode active material,
wherein the matrix material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a.

In the present application, the matrix material is secondary particles composed of primary particles. Thus, by means of the preparation method above, a boron-containing compound and a metal elementary substance undergo a reaction with phase changes during sintering to form a boron-containing ternary alloy, or a boron-containing compound and a metal oxide undergo a reaction with phase changes during sintering to form a boron-containing ternary alloy oxide. In virtue of the reaction wettability between the boron-containing ternary alloy or the boron-containing ternary alloy oxide and the matrix material, under a strong drive of an interfacial chemical reaction, the boron-containing ternary alloy or the boron-containing ternary alloy oxide is not only fully coated onto the surface of the secondary particles, but also is injected into the grain boundaries of the primary particles, that is, dual coating effects of both the surface and the grain boundaries are achieved synchronously, which greatly improves the surface-structure stability of the material material, such that the storage stability and safety of the material are improved.

In some embodiments, the boron-containing compound is one or more selected from cobalt boride, hafnium boride, niobium boride, titanium boride, zirconium boride, tungsten boride, aluminum boride, molybdenum boride, and copper boride, and/or the metal elementary substance is one or more selected from cobalt, hafnium, niobium, titanium, zirconium, tungsten, aluminum, molybdenum and copper, and/or the metal oxide is one or more selected from cobalt oxide, hafnium oxide, niobium oxide, titanium oxide, zirconium oxide, tungsten oxide, aluminum oxide, molybdenum oxide, and copper oxide. When the boron-containing compound, metal elementary substance and metal oxide described above are selected, the surface-structure stability of the material can be improved, such that the high-temperature storage performance and the safety performance of a battery are improved.

In the present application, a method for preparing a high-nickel positive electrode material that is known in the art, e.g., PCT/CN 2021/141873, can be used to prepare the matrix material of the present application, that is, a lithium source, a high-nickel hydroxide precursor, and a dopant are mixed and then sintered under an oxygen atmosphere at 650-850°C to obtain the matrix material of the present application.

In some embodiments, the matrix material prepared in step S1) has a (Dv90 - Dv10)/Dv50 ≥ 1.2, optionally (Dv90 - Dv10)/Dv50 ≥ 1.25. When the particle size distribution of the matrix material satisfies the ranges above, a positive electrode active material having a good dispersity, a high filling degree between particles and a good material processability can be obtained.

In some embodiments, in step S2), the matrix material, a boron-containing compound and a metal elementary substance are mixed under an inert atmosphere and sintered under an inert atmosphere, wherein the sintering temperature is 300-700°C, optionally 300-550°C, and the sintering time is 3-10 h, optionally 5-10 h. Thus, a positive electrode active material coated with a boron-containing ternary alloy can be obtained, such that the surface-structure stability of the material is improved, which improves the high-temperature storage performance and safety performance of a battery.

In some embodiments, in step S2), the matrix material, a boron-containing compound and a metal oxide are sintered under an oxygen atmosphere, wherein the sintering temperature is 300-700°C, optionally 550-650°C, and the sintering time is 3-10 h, optionally 3-8 h. Thus, a positive electrode active material coated with a boron-containing ternary alloy oxide can be obtained, such that the surface-structure stability of the material is improved, which improves the high-temperature storage performance and safety performance of a battery.

In the present application, in step S3), the mass ratio of the intermediate material to water is 1 : 1 - 1 : 5, the duration of water washing is 1-10 min, the vibration frequency of the vibration drying is 10-50 Hz, and the drying time is 2-8 h. The vibration drying can be carried out by using, for example, a WZG-series horizontal vibrating dryer; the vibration frequency may be, for example, 10 Hz or more, 15 Hz or more, 20 Hz or more, 30 Hz or more, or 50 Hz or more; and the drying time may be, for example, 2 h or more, 3 h or more, 4 h or more, 5 h, 6 h or more, 7 h or more, or 8 h or more. After the vibration drying in step S3), large truncated corners on secondary particles can be peeled off, which broadens the particle size distribution of the material, resulting in a positive electrode active material having a good dispersity, a high filling degree between particles, a good material processability, and a high compacted density, which can effectively increase the energy density of a battery.

A third aspect of the present application provides a positive electrode plate comprising a positive electrode current collector and a positive electrode film layer provided on at least one surface of the positive electrode current collector, wherein the positive electrode film layer comprises a first positive electrode active material, the first positive electrode active material is a positive electrode active material in the first aspect of the present application or a positive electrode active material prepared by the method in the second aspect of the present application, and the content of the first positive electrode active material in the positive electrode film layer is 10 wt% or more, based on the total weight of the positive electrode film layer. The positive electrode active material in the first aspect of the present application or a positive electrode active material prepared by the preparation method in the second aspect of the present application has a good dispersity and a high filling degree between particles and therefore can be used to improve the processability of an electrode plate.

In some embodiments, the positive electrode film layer further comprises a second positive electrode active material, and the ratio in amount of the first positive electrode active material to the second positive electrode active material is 6 : 4 - 8 : 2, optionally 6.5 : 3.5 - 7.5 : 2.5; the second positive electrode active material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a; and the second positive electrode active material has a Dv50 of 2 µm - 5 µm, optionally 2.5 µm - 3.5 µm. When a positive electrode plate is prepared by using two positive electrode active materials having different particle sizes, i.e., a positive electrode active material in the first aspect of the present application or a positive electrode active material prepared by the preparation method in the second aspect of the present application as a first positive electrode active material and a second positive electrode active material, the second positive electrode active material having a smaller particle size can effectively fill the pores of the first positive electrode active material having a larger particle size, thereby further improving the processability of the electrode plate.

In some embodiments, the tap density of the second positive electrode active material is ≤ 1.8 g/cm³, optionally 1.2-1.5 g/cm³. When the tap density of the second positive electrode active material is in the ranges above, the processability of the electrode plate can be further improved.

In the present application, when the positive electrode film layer of the positive electrode plate comprises a first positive electrode material and a second positive electrode material, the first positive electrode material and the second positive electrode material has a powder compacted density of 3.71-3.83 g/cm³ under 5 T.

In addition, the secondary battery, battery module, battery pack and power consuming device of the present application are described below with reference to the accompanying drawings as appropriate.

In one embodiment of the present application, a secondary battery is provided.

Typically, a secondary battery comprises a positive electrode plate, a negative electrode plate, an electrolyte and a separator. During the charge/discharge of the battery, active ions are intercalated and de-intercalated back and forth between the positive electrode plate and the negative electrode plate. The electrolyte functions to conduct ions between the positive electrode plate and the negative electrode plate. The separator is arranged between the positive electrode plate and the negative electrode plate and mainly functions to prevent the positive and negative electrodes from short-circuiting while enabling ions to pass through. In the present application, the group margin of the battery is 90-95%.

### [Positive electrode plate]

The positive electrode plate comprises a positive electrode current collector and a positive electrode film layer provided on at least one surface of the positive electrode current collector, the positive electrode film layer comprising the positive electrode active material of the first aspect of the present application.

As an example, the positive electrode current collector has two surfaces opposite in its own thickness direction, and the positive electrode film layer is provided on either or both of opposite surfaces of the positive electrode current collector.

In some embodiments, the positive electrode current collector may be a metal foil or a composite current collector. For example, as a metal foil, an aluminum foil can be used. The composite current collector may comprise a polymer material base layer and a metal layer formed on at least one surface of the polymer material base layer. The composite current collector can be formed by forming a metal material (aluminum, an aluminum alloy, nickel, a nickel alloy, titanium, a titanium alloy, silver and a silver alloy, etc.) on a polymer material substrate (such as polypropylene (PP), polyethylene terephthalate (PET), polybutylene terephthalate (PBT), polystyrene (PS), polyethylene (PE), etc.).

In some embodiments, the positive electrode active material is a positive electrode active material in the first aspect of the present application or a positive electrode active material obtained by the method in the second aspect of the present application. The weight percentage of the positive electrode active material in the positive electrode film layer is 80-100 wt%, based on the total weight of the positive electrode film layer.

In some embodiments, the positive electrode active material comprises a positive electrode active material in the first aspect of the present application as a first positive electrode material and also another positive electrode active material as follows as a second positive electrode active material: the second positive electrode active material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a; and the second positive electrode active material has a Dv50 of 2 µm - 5 µm, optionally 2.5 µm - 3.5 µm. When the positive electrode active material comprises a first positive electrode active material and a second positive electrode active material, the mass ratio of the first positive electrode active material to the second positive electrode active material is 8.5 : 1.5 - 5 : 5. The weight percentage of the positive electrode active material in the positive electrode film layer is 80-100 wt%, based on the total weight of the positive electrode film layer.

In some embodiments, the positive electrode film layer further optionally comprises a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight percentage of the binder in the positive electrode film layer is 0-20 wt%, based on the total weight of the positive electrode film layer.

In some embodiments, the positive electrode film layer also optionally comprises a conductive agent. As an example, the conductive agent may include at least one of superconducting carbon, acetylene black, carbon black, Ketjen black, carbon dots, carbon nanotubes, graphene, and carbon nanofibers. The weight percentage of the conductive agent in the positive electrode film layer is 0-20 wt%, based on the total weight of the positive electrode film layer.

In some embodiments, the positive electrode plate can be prepared by dispersing the above-mentioned components for preparing the positive electrode plate, such as a positive electrode active material, a conductive agent, a binder and any other components, in a solvent (e.g., N-methyl pyrrolidone) to form a positive electrode slurry, wherein the positive electrode slurry has a solid content of 40-80 wt%, and the viscosity at room temperature thereof is adjusted to 5000-25000 mPa•s; and coating the positive electrode slurry onto a positive electrode current collector, followed by the procedures such as drying and cold pressing, so as to obtain the positive electrode plate, wherein the unit surface density of the positive electrode powder coating is 150-350 mg/m², and the compacted density of the positive electrode plate is 3.0-3.6 g/cm³, optionally 3.3-3.5 g/cm³. The compacted density is calculated according to the following equation:
the compacted density = the surface density of the coating/(the thickness of the electrode plate after pressing - the thickness of the current collector).

### [Negative electrode plate]

The negative electrode plate comprises a negative electrode current collector and a negative electrode film layer provided on at least one surface of the negative electrode current collector, the negative electrode film layer comprising a negative electrode active material.

As an example, the negative electrode current collector has two surfaces opposite in its own thickness direction, and the negative electrode film layer is provided on either or both of the two opposite surfaces of the negative electrode current collector.

In some embodiments, the negative electrode current collector may be a metal foil or a composite current collector. For example, as a metal foil, a copper foil can be used. The composite current collector may comprise a polymer material base layer and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode active material can be a negative electrode active material known in the art for batteries. as an example, the negative electrode active material may comprise at least one of the following materials: artificial graphite, natural graphite, soft carbon, hard carbon, a silicon-based material, a tin-based material and lithium titanate, etc. The silicon-based material may be selected from at least one of elemental silicon, a silicon oxide compound, a silicon carbon composite, a silicon nitrogen composite, and a silicon alloy. The tin-based material may be selected from at least one of elemental tin, a tin oxide compound, and a tin alloy. However, the present application is not limited to these materials, and other conventional materials that can be used as negative electrode active materials for batteries can also be used. These negative electrode active materials may be used alone or as a combination of two or more. The negative electrode active material may have an average particle size (D₁₀) of 1 µm - 15 µm, preferably 4 µm - 9 µm, an average particle size (D₅₀) of 12 µm - 22 µm, preferably 14 µm - 17 µm, and an average particle size (D₉₀) of 26 µm to 40 µm, preferably 30 µm - 37 µm. D₁₀ is the corresponding particle size when the cumulative volume distribution percentage of a sample reaches 10%; D₅₀ is the corresponding particle size when the cumulative volume distribution percentage of a sample reaches 50%; and D₉₀ is the corresponding particle size when the cumulative volume distribution percentage of a sample reaches 90%. The weight percentage of the negative electrode active material in the negative electrode film layer is 70-100 wt%, based on the total weight of the negative electrode film layer.

In some embodiments, the negative electrode film layer may optionally comprise a binder. The binder may be selected from at least one of a butadiene styrene rubber (SBR), polyacrylic acid (PAA), sodium polyacrylate (PAAS), polyacrylamide (PAM), polyvinyl alcohol (PVA), sodium alginate (SA), polymethacrylic acid (PMAA) and carboxymethyl chitosan (CMCS). The weight percentage of the binder in the negative electrode film layer is 0-30 wt%, based on the total weight of the negative electrode film layer.

In some embodiments, the negative electrode film layer may optionally comprise a conductive agent. The conductive agent may be selected from at least one of superconductive carbon, acetylene black, carbon black, Ketjen black, carbon dots, carbon nanotubes, graphene, and carbon nanofibers. The weight percentage of the conductive agent in the negative electrode film layer is 0-20 wt%, based on the total weight of the negative electrode film layer.

In some embodiments, the negative electrode film layer may optionally comprise other auxiliary agents, such as thickener (e.g. sodium carboxymethyl cellulose (CMC-Na)), etc. The weight percentage of the other auxiliary agents in the negative electrode film layer is 0-15 wt%, based on the total weight of the negative electrode film layer.

In some embodiments, the negative electrode plate can be prepared by dispersing the above-mentioned components for preparing the negative electrode plate, such as the negative electrode active material, the conductive agent, the binder and any other components into a solvent (e.g., deionized water) to form a negative electrode slurry, wherein the negative electrode slurry has a solid content of 30-70 wt%, and the viscosity at room temperature thereof is adjusted to 2000-10000 mPa•s; and coating the negative electrode slurry onto a negative electrode current collector, followed by procedures such as drying and cold pressing, so as to obtain the negative electrode plate. The unit surface density of the negative electrode powder coating is 75-220 mg/m², and the negative electrode plate has a compacted density of 1.2-2.0 g/m³.

### [Electrolyte]

The electrolyte functions to conduct ions between the positive electrode plate and the negative electrode plate. The type of the electrolyte is not specifically limited in the present application and can be selected as necessary. For example, the electrolyte may be in a liquid state, a gel state or an all-solid state.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate. The concentration of the electrolyte salt is typically 0.5-5 mol/L.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally include an additive. For example, the additive may include a negative electrode film-forming additive and a positive electrode film-forming additive, and may further include an additive that can improve certain performances of the battery, such as an additive that improves the overcharge performance of the battery, or an additive that improves the high temperature or low-temperature performance of the battery.

### [Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, nonwoven fabrics, polyethylene, polypropylene and polyvinylidene fluoride. The separator may be either a single-layer film or a multi-layer composite film, and is not limited particularly. When the separator is a multi-layer composite film, the materials in the respective layers may be same or different, which is not limited particularly.

In some embodiments, the thickness of the separator is 6-40 µm, optionally 12-20 µm.

In some embodiments, an electrode assembly may be formed by a positive electrode plate, a negative electrode plate and a separator by a winding process or a stacking process.

In some embodiments, the secondary battery may comprise an outer package. The outer package may be used to encapsulate the above-mentioned electrode assembly and electrolyte.

In some embodiments, the outer package of the secondary battery can be a hard housing, for example, a hard plastic housing, an aluminum housing, a steel housing, etc. The outer package of the secondary battery may also be a soft bag, such as a pouch-type soft bag. The material of the soft bag may be plastics, and the examples of plastics may comprise polypropylene, polybutylene terephthalate, polybutylene succinate, etc.

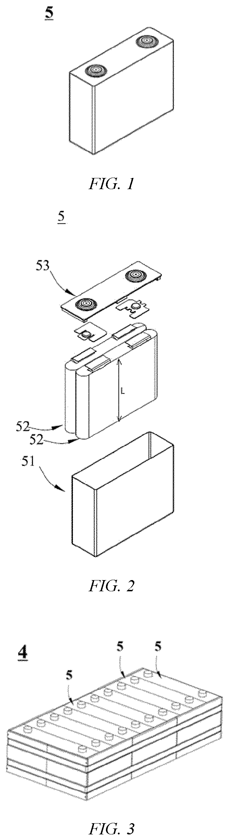

The shape of the secondary battery is not particularly limited in the present application and may be cylindrical, square or of any other shape. For example, Fig. 1 shows a secondary battery 5 with a square structure as an example.

In some embodiments, with reference to Fig. 2, the outer package may include a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 may cover the opening to close the accommodating cavity. The positive electrode plate, the negative electrode plate, and the separator may be subjected to a winding process or a laminating process to form an electrode assembly 52. The electrode assembly 52 is encapsulated in the accommodating cavity. The electrolyte solution infiltrates the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

Fig. 3 shows a battery module 4 as an example. Referring to Fig. 3, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may further comprise an outer housing with an accommodating space, and the plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

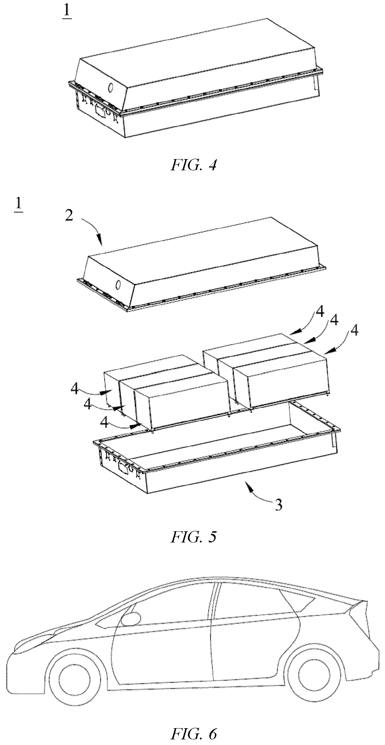

Figs. 4 and 5 show a battery pack 1 as an example. Referring to Fig. 4 and Fig. 5, the battery pack 1 may comprise a battery box and a plurality of battery modules 4 provided in the battery box. The battery box comprises an upper box body 2 and a lower box body 3, wherein the upper box body 2 may cover the lower box body 3 to form a closed space for accommodating the battery modules 4. The plurality of the battery modules 4 may be arranged in the battery box in any manner.

In addition, the present application further provides a power consuming device. The power consuming device comprises at least one of the secondary battery, the battery module, or the battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship, and satellite, an energy storage system, etc., but is not limited thereto.

As for the power consuming device, the secondary battery, battery module or battery pack can be selected according to the usage requirements thereof.

Fig. 6 shows a power consuming device as an example. The power consuming device may be a pure electric vehicle, a hybrid electric vehicle, a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may have a secondary battery used as a power source.

### Examples

Hereinafter, the examples of the present application will be explained. The examples described below are exemplary and are merely for explaining the present application, and should not be construed as limiting the present application. The examples in which techniques or conditions are not specified are based on the techniques or conditions described in documents in the art or according to the product instructions. The reagents or instruments used therein on which no manufacturers are specified are all commercially available conventional products.

### I. Manufacturing of secondary battery

### Example 1

### 1. Preparation of positive electrode active material

S1) Preparation of matrix material of LiNi_{0.92}Co_{0.07}Mn_{0.0086}Y_{0.0014}O₂: lithium hydroxide, a dried high-nickel ternary precursor of Ni_{0.92}Co_{0.07}Mn_{0.01}(OH)₂ (with a (Dv90 - Dv10)/Dv50 of 1.45) and yttrium oxide were weighed at a stoichiometric ratio according to the chemical formula, wherein the molar ratio of Li/Me (Me was the sum of all metal elements except lithium) was 1.03, and the doping amount of yttrium was 1500 ppm; the mixture was mixed in a high-speed mixer until uniform and then sintered in a kiln at a temperature of 760°C for 20 h under an atmosphere of oxygen; and after cooling, the matrix material could be obtained.

S2) The matrix material above, cobalt boride (purchased from Shanghai Aladdin Bio-Chem Technology Co., Ltd., CAS: 12006-77-8), and titanium were mixed at a mass ratio of 1 : 0.015 : 0.0041 in a high-speed mixer under an atmosphere of nitrogen, and then the mixture was placed into a kiln and sintered at a temperature of 350°C for 5 h under an atmosphere of nitrogen to obtain an intermediate material.

S3) The intermediate material was washed with water at a mass ratio of the intermediate material to water of 1 : 5 for 30 min, followed by centrifugation, filtration and then vibration drying at a vibration frequency of 30 Hz for 5 h to obtain the positive electrode active material.

### 2. Preparation of secondary battery

[Positive electrode plate] The positive electrode active material above, a conductive agent of acetylene black, and a binder of polyvinylidene fluoride (PVDF) at a weight ratio of 96 : 2 : 2 were fully stirred and mixed into an appropriate amount of N-methylpyrrolidone (NMP) to form a uniform positive electrode slurry with a solid content of 70 wt%. The positive electrode slurry was coated onto the surface of an aluminum foil having a thickness of 12 µm, followed by drying and cold pressing, to obtain a positive electrode plate having a positive electrode active material loading of 21.5 mg/cm².

[Negative electrode plate] A negative electrode active material of synthetic graphite and hard carbon, a conductive agent of acetylene black, a binder of butadiene styrene rubber (SBR), a tackifier of lithium-based montmorillonite, and a thickening agent of sodium carboxymethyl cellulose (CMC-Na) were mixed at a weight ratio of 90 : 5 : 2 : 2 : 1 in deionized water until uniform, and then the resulting mixture was coated onto a copper foil, dried and cold pressed to obtain a negative electrode plate. The coating amount was 0.015 g/cm², and the compacted density was 1.65 g/cm³.

[Electrolyte solution] Ethylene carbonate (EC), ethyl methyl carbonate (EMC), and diethyl carbonate (DEC) were mixed at a volume ratio of 1 : 1 : 1, and then LiPF₆ was uniformly dissolved into the above solution to obtain an electrolyte solution, where the concentration of LiPF₆ was 1 mol/L.

[Separator] The separator was purchased from Cellgard company, and the model was cellgard 2400.

The positive electrode plate, separator, and negative electrode plate were stacked in sequence, such that the separator was located between the positive and negative electrode plates to function as isolation, and then the resulting stack was wound to obtain a bare cell; and the bare cell having a capacity of 4.3 Ah was placed in an outer packaging foil, and 8.6 g of the electrolyte solution prepared above was injected into the dried cell, followed by vacuum packaging, leaving to stand, forming, shaping and other processes to obtain the secondary battery of example 1. A hard-shell housing with a length × width × height = 148 mm × 28.5 mm × 97.5 mm was selected as the outer package, the material of the housing was aluminum, the thickness of the housing was 0.8 mm, and the group margin of the battery was 94%.

### Example 2

The preparation of a secondary battery was the same as example 1, except that in the preparation of a positive electrode active material, the matrix material, cobalt boride, and hafnium were mixed at a mass ratio of 1 : 0.015 : 0.0154 in step S2).

### Example 3

The preparation of a secondary battery was the same as example 1, except that in the preparation of a positive electrode active material, the matrix material, cobalt boride, and niobium were mixed at a mass ratio of 1 : 0.015 : 0.0080 in step S2).

### Example 4

The preparation of a secondary battery was the same as example 1, except that in the preparation of a positive electrode active material, the matrix material, cobalt boride, and tungsten were mixed at a mass ratio of 1 : 0.015 : 0.0158 in step S2).

### Example 5

The preparation of a secondary battery was the same as example 1, except that in the preparation of a positive electrode active material, the matrix material, cobalt boride, and aluminum were mixed at a mass ratio of 1 : 0.015 : 0.0023 in step S2).

### Example 6

The preparation of a secondary battery was the same as example 1, except that in the preparation of a positive electrode active material, the matrix material, hafnium boride (purchased from purchased from Shanghai Aladdin Bio-Chem Technology Co., Ltd., CAS: 12007-23-7), and titanium were mixed at a mass ratio of 1 : 0.015 : 0.0014 in step S2).

### Example 7

The preparation of a secondary battery was the same as example 1, except that in the preparation of a positive electrode active material, the matrix material, cobalt boride, and titanium dioxide were mixed at a mass ratio of 1 : 0.015 : 0.007 under an air atmosphere and sintered at a temperature of 650°C under an atmosphere of oxygen in step S2).

### Example 8

The preparation of a secondary battery was the same as example 1, except that in the preparation of a positive electrode active material, the matrix material, cobalt boride, and hafnium dioxide were mixed at a mass ratio of 1 : 0.015 : 0.018 under an air atmosphere and sintered at a temperature of 650°C under an atmosphere of oxygen in step S2).

### Example 9

The preparation of a secondary battery was the same as example 1, except that in the preparation of a positive electrode active material, the matrix material, cobalt boride, and niobium pentoxide were mixed at a mass ratio of 1 : 0.015 : 0.023 under an air atmosphere and sintered at a temperature of 650°C under an atmosphere of oxygen in step S2).

### Example 10

The preparation of a secondary battery was the same as example 1, except that in the preparation of a positive electrode active material, the matrix material, cobalt boride, and tungsten trioxide were mixed at a mass ratio of 1 : 0.015 : 0.020 under an air atmosphere and sintered at a temperature of 650°C under an atmosphere of oxygen in step S2).

### Example 11

The preparation of a secondary battery was the same as example 1, except that in the preparation of a positive electrode active material, the matrix material, cobalt boride, and alumina were mixed at a mass ratio of 1 : 0.015 : 0.009 under an air atmosphere and sintered at a temperature of 650°C under an atmosphere of oxygen in step S2).

### Example 12

The preparation of a secondary battery was the same as example 1, except that in the preparation of a positive electrode active material, the matrix material, hafnium boride, and titanium dioxide were mixed at a mass ratio of 1 : 0.015 : 0.002 under an air atmosphere and sintered at a temperature of 650°C under an atmosphere of oxygen in step S2).

### Example 13

The preparation of a secondary battery was the same as example 1, except that in the preparation of a positive electrode active material, the matrix material, cobalt boride, and titanium were mixed at a mass ratio of 1 : 0.0005 : 0.0001 in step S2).

### Example 14

The preparation of a secondary battery was the same as example 1, except that in the preparation of a positive electrode active material, the matrix material, cobalt boride, and titanium were mixed at a mass ratio of 1 : 0.002 : 0.0005 in step S2).

### Example 15

The preparation of a secondary battery was the same as example 1, except that in the preparation of a positive electrode active material, the matrix material, cobalt boride, and titanium were mixed at a mass ratio of 1 : 0.004 : 0.0011 in step S2).

### Example 16

The preparation of a secondary battery was the same as example 1, except that in the preparation of a positive electrode active material, the matrix material, cobalt boride, and titanium were mixed at a mass ratio of 1 : 0.01 : 0.0027 in step S2).

### Example 17

The preparation of a secondary battery was the same as example 1, except that in the preparation of a positive electrode active material, the matrix material, cobalt boride, and titanium were mixed at a mass ratio of 1 : 0.017 : 0.0047 in step S2).

### Example 18

The preparation of a secondary battery was the same as example 1, except that in the preparation of a positive electrode active material, the matrix material, cobalt boride, and titanium were mixed at a mass ratio of 1 : 0.02 : 0.0055 in step S2).

### Example 19

The preparation of a secondary battery was the same as example 1, except that in the preparation of a positive electrode active material, the matrix material, cobalt boride, and hafnium were mixed at a mass ratio of 1 : 0.02 : 0.0036 in step S2).

### Example 20

The preparation of a secondary battery was the same as example 1, except that in the preparation of a positive electrode active material, the matrix material, cobalt boride, and hafnium were mixed at a mass ratio of 1 : 0.02 : 0.0136 in step S2).

### Example 21

The preparation of a secondary battery was the same as example 1, except that in the preparation of a positive electrode active material, the matrix material, cobalt boride, and hafnium were mixed at a mass ratio of 1 : 0.015 : 0.0384 in step S2).

### Example 22

The preparation of a secondary battery was the same as example 1, except that in the preparation of a positive electrode active material, the matrix material, cobalt boride, and hafnium were mixed at a mass ratio of 1 : 0.015 : 0.1152 in step S2).

### Example 23

The preparation of a secondary battery was the same as example 1, except that in the preparation of a positive electrode active material, the matrix material, cobalt boride, and hafnium were mixed at a mass ratio of 1 : 0.015 : 0.0351 in step S2).

### Example 24

The preparation of a secondary battery was the same as example 1, except that in the preparation of a positive electrode active material, the matrix material, hafnium boride, and titanium dioxide were mixed at a mass ratio of 1 : 0.015 : 0.0004 under an air atmosphere and sintered at a temperature of 650°C under an atmosphere of oxygen in step S2).

### Example 25

The preparation of a secondary battery was the same as example 1, except that in the preparation of a positive electrode active material, the matrix material, hafnium boride, and titanium dioxide were mixed at a mass ratio of 1 : 0.015 : 0.0018 under an air atmosphere and sintered at a temperature of 650°C under an atmosphere of oxygen in step S2).

### Example 26

The preparation of a secondary battery was the same as example 1, except that in the preparation of a positive electrode active material, the matrix material, hafnium boride, and titanium dioxide were mixed at a mass ratio of 1 : 0.015 : 0.0120 under an air atmosphere and sintered at a temperature of 650°C under an atmosphere of oxygen in step S2).

### Example 27

The preparation of a secondary battery was the same as example 1, except that in the preparation of a positive electrode active material, the matrix material, hafnium boride, and titanium dioxide were mixed at a mass ratio of 1 : 0.015 : 0.0359 under an air atmosphere and sintered at a temperature of 650°C under an atmosphere of oxygen in step S2).

### Example 28

The preparation of a secondary battery was the same as example 1, except that in the preparation of a positive electrode active material, the intermediate material was washed with water at a mass ratio of the intermediate material to water of 1 : 1 in step S3).

### Example 29

The preparation of a secondary battery was the same as example 1, except that in the preparation of a positive electrode active material, the intermediate material was washed with water at a mass ratio of the intermediate material to water of 1 : 3 in step S3).

### Example 30

The preparation of a secondary battery was the same as example 1, except that in the preparation of a positive electrode active material, the vibration drying was carried out at a vibration frequency of 10 Hz in step S3).

### Example 31

The preparation of a secondary battery was the same as example 1, except that in the preparation of a positive electrode active material, the vibration drying was carried out at a vibration frequency of 15 Hz in step S3).

### Example 32

The preparation of a secondary battery was the same as example 1, except that in the preparation of a positive electrode active material, the vibration drying was carried out at a vibration frequency of 20 Hz in step S3).

### Example 33

The preparation of a secondary battery was the same as example 1, except that in the preparation of a positive electrode active material, the vibration drying was carried out at a vibration frequency of 50 Hz in step S3).

### Example 34

The preparation of a secondary battery was the same as example 1, except that in the preparation of a positive electrode active material, the matrix material was LiNi_{0.92}Co_{0.07}Mn_{0.0087}Sr_{0.0013}O₂, wherein the molar ratio of Li/Me (Me was the sum of all metal elements except lithium) was 1.03, and the doping amount of strontium was 1500 ppm; and the preparation method for the matrix material was similar to that in example 1.

### Example 35

The preparation of a secondary battery was the same as example 1, except that in the preparation of a positive electrode active material, the matrix material was LiNi_{0.83}Co_{0.06}Mn_{0 1086}Y_{0.0014}O₂, wherein the molar ratio of Li/Me (Me was the sum of all metal elements except lithium) was 1.03, and the doping amount of yttrium was 1500 ppm; and the preparation method for the matrix material was similar to that in example 1.

### Example 36

First positive electrode active material: the positive electrode active material prepared in example 1 was used as a first positive electrode material.

Preparation of second positive electrode active material of LiNi_{0.92}Co_{0.07}Mn_{0.009}Sr_{0.001}O₂: lithium hydroxide, a dried high-nickel ternary precursor of Ni_{0.92}Co_{0.07}Mn_{0.01}(OH)₂ and yttrium oxide were weighed at a stoichiometric ratio according to the chemical formula, wherein the molar ratio of Li/Me (Me was the sum of all metal elements except lithium) was 1.03, and the doping amount of strontium was 1500 ppm; the materials were mixed in a high-speed mixer until uniform and then sintered in a kiln at a temperature of 760°C for 20 h under an atmosphere of oxygen; and after cooling, the resulting material was crushed by means of an airflow mill, and a micro powder was separated by means of cyclonic separation, followed by vibration sieving to obtain a second positive electrode active material having a Dv50 of 3.0 µm.

The first positive electrode active material and the second positive electrode active material were mixed uniformly at a mass ratio of 1 : 1, and the resulting mixture is used as a positive electrode active material for preparing a positive electrode plate.

The preparation process of a secondary battery was the same as example 1.

### Example 37

The preparation of a secondary battery was the same as example 37, except that the first positive electrode active material and the second positive electrode active material were mixed at a mass ratio of 2 : 1.

### Example 38

The preparation of a secondary battery was the same as example 37, except that the first positive electrode active material and the second positive electrode active material were mixed at a mass ratio of 3 : 1.

### Example 39

The preparation of a secondary battery was the same as example 37, except that the first positive electrode active material and the second positive electrode active material were mixed at a mass ratio of 4 : 1.

### Example 40

The preparation of a secondary battery was the same as example 37, except that the first positive electrode active material and the second positive electrode active material were mixed at a mass ratio of 8.5 : 1.5.

### Comparative example 1

The preparation of a secondary battery was the same as example 1, except that the matrix material of LiNi_{0.92}Co_{0.07}Mn_{0.0086}Y_{0.0014}O₂ in example 1 was directly used as a positive electrode active material of the secondary battery.

### Comparative example 2

The preparation of a secondary battery was the same as example 1, except that in the preparation of a positive electrode active material, step S3) was omitted, that is, water washing and vibration drying were not carried out.

### II. Tests of related parameters

### (1) Test of compacted density

A certain amount of a powder was put into a compaction dedicated mold, and then the mold was placed on a compacted density instrument. A pressure of 5 T was applied, the thickness (after pressure relief) of the powder under the pressure was read from the instrument, and a compacted density was calculated through ρ = m/v.

The results were shown in Table 1.

### (2) Test of particle size

The particle size of a positive electrode active material was measured according to GB/T 19077.1-2016/ISO 13320:2009 (particle size distribution laser diffraction method). An appropriate amount of a positive electrode active material described above was added into a clean beaker, and an appropriate amount of pure water was added, followed by an ultrasonic treatment at 120 W/5 min to ensure the full dispersion of the powdery material in water. The solution was poured into the sample injection tower of a laser particle size analyzer (Malvern, model: Mastersizer 3000) and circulated to a test light path system; the scattered light emitted by particles under the irradiation of a laser beam was received and the energy distribution thereof was measured to obtain the particle size distribution characteristics of the particles (shading degree: 8-12%); and the corresponding numerical values of Dv10, Dv50, and Dv90 were read to calculate (Dv90 - Dv10)/Dv50.

The results were shown in Tables 1 and 2.

### (3) Compacted density of positive electrode plate

The compacted density PD of a positive electrode plate was calculated by the formula PD = M/(d × A). In the formula, M was the mass of a small disc with a diameter of 40 mm cut from the positive electrode plate, and the average value was obtained by weighing same 10 times; d was the thickness of the positive electrode plate, and the average value was obtained by measuring the thickness 10 times; and A was the area of the small disc with a diameter of 40 mm.

The test results were shown in Tables 1 and 2.

### (4) Extension rate of positive electrode plate

The extension rate in the length direction of a positive electrode plate after cold pressing was calculated by the formula ΔEL% = (L2 - L1)/L1 × 100%. In the formula, L1 was the distance between marks before cold pressing, which was 1000 mm, and L2 was the distance between marks after cold pressing. The mark was formed by: in the central area of the electrode plate, three 1000 mm long line segments extending in the length direction of the electrode plate were taken respectively at different positions in the width direction of the electrode plate, and the two end points of the line segments were marked. L2 was recorded as the average value of the measured distance between the two end points of each line segment after cold pressing.

The test results were shown in Tables 1 and 2.

### (5) Particle size and the number of positive electrode active material in positive electrode plate

10 areas were randomly selected from the cross section of a positive electrode plate, and a scanning electron microscope ZEISS Sigma 300 was used to obtain the scanning electron microscope photographs of each area, with reference to JY/T010-1996. In the scanning electron microscope (SEM) photographs, the particle size of a particle was measured. Whether the particles in the SEM photographs belong to the particles of a first positive electrode active material or the particles of a second positive electrode active material was determined based on their particle size. By means of SEM photographs, the number of particles of a first positive electrode active material and the number of particles of a second positive electrode active material in each test area were counted respectively, and the average number of particles of a first positive electrode active material and the average number of particles of a second positive electrode active material were calculated respectively.

### III. Performance test of secondary battery

Capacity retention rate after storage at 60°C:
In a constant-temperature environment at 25°C, a secondary battery was allowed to stand for 5 min, discharged at 1/3 C to 2.8 V, allowed to stand for 5 min, charged at 1/3 C to 4.25 V, then charged at a constant voltage of 4.25 V until the current was ≤ 0.05 mA, and allowed to stand for 5 min, with the charge capacity at the moment being recorded as C0; and then the secondary battery was discharged at 1/3 C to 2.8 V, and the discharge capacity at the moment was the initial capacity per gram, recorded as D0. Then the battery was charged at a constant current of 0.33 C to 4.25 V and charged at the constant voltage until the current was ≤ 0.05 mA, allowed to stand for 5 min and then placed into a high and low temperature box at 60°C; and the battery was allowed to stand for 1 h until the temperature of the battery reached the target temperature and was stored. After 15 days, the battery was taken out and subjected to the repeated processes described above in a constant-temperature environment at 25°C, and the capacity Dn (n = 0, 1, 2...) was recorded every 15 days; and the capacity retention rate after 60 days of storage was calculated as (D4 - D0)/D0 * 100%.

**Table 1 Relevant parameters of positive electrode active materials, performance of positive electrode plates, and performance of secondary batteries**

| Example No. | Positive electrode active material | | | | | | Positive electrode plate | | Performance of secondary battery |
|---|---|---|---|---|---|---|---|---|---|
| | Coating layer | | | SPAN² | Dv50 (µm) | Compacted density (g/cm³) | Compacted density of electrode plate (g/cm³) | Extension rate (%) | Capacity retention rate after storage at 60°C (%) |
| | Composition | Content¹ (ppm) | Molar ratio | | | | | | |
| 1 | Boron-cobalt-titanium | 15000 | 1 : 1 : 0.4 | 1.70 | 9.5 | 3.75 | 3.55 | 0.7 | 94.1 |
| 2 | Boron-cobalt-hafnium | 15000 | 1 : 1 : 0.4 | 1.65 | 9.5 | 3.73 | 3.53 | 0.7 | 93.5 |
| 3 | Boron-cobalt-niobium | 15000 | 1 : 1 : 0.4 | 1.64 | 9.5 | 3.7 | 3.53 | 0.72 | 92.8 |
| 4 | Boron-cobalt-tungsten | 15000 | 1 : 1 : 0.4 | 1.55 | 9.5 | 3.71 | 3.48 | 0.71 | 93.6 |
| 5 | Boron-cobalt-aluminum | 15000 | 1 : 1 : 0.4 | 1.60 | 9.5 | 3.66 | 3.51 | 0.71 | 93.8 |
| 6 | Boron-hafnium-titanium | 15000 | 1 : 0.5 : 0.2 | 1.58 | 9.5 | 3.67 | 3.5 | 0.7 | 93.2 |
| 7 | Boron-cobalt-titanium oxide | 15000 | 1 : 1 : 0.4 | 1.73 | 9.5 | 3.75 | 3.56 | 0.71 | 93.8 |
| 8 | Boron-cobalt-hafnium oxide | 15000 | 1 : 1 : 0.4 | 1.68 | 9.5 | 3.65 | 3.52 | 0.72 | 93.2 |
| 9 | Boron-cobalt-niobium oxide | 15000 | 1 : 1 : 0.4 | 1.66 | 9.5 | 3.66 | 3.53 | 0.7 | 92.4 |
| 10 | Boron-cobalt-tungsten oxide | 15000 | 1 : 1 : 0.4 | 1.61 | 9.5 | 3.68 | 3.51 | 0.69 | 93.2 |
| 11 | Boron-cobalt-aluminum oxide | 15000 | 1 : 1 : 0.4 | 1.65 | 9.5 | 3.66 | 3.52 | 0.69 | 93.5 |
| 12 | Boron-hafnium-titanium oxide | 15000 | 1 : 0.5 : 0.2 | 1.62 | 9.5 | 3.67 | 3.52 | 0.72 | 93.1 |
| 13 | Boron-cobalt-titanium | 500 | 1 : 1 : 0.4 | 1.53 | 9.5 | 3.66 | 3.48 | 0.72 | 93.2 |
| 14 | Boron-cobalt-titanium | 2000 | 1 : 1 : 0.4 | 1.56 | 9.5 | 3.65 | 3.48 | 0.7 | 93.4 |
| 15 | Boron-cobalt-titanium | 4000 | 1 : 1 : 0.4 | 1.59 | 9.5 | 3.65 | 3.51 | 0.73 | 93.7 |
| 16 | Boron-cobalt-titanium | 10000 | 1 : 1 : 0.4 | 1.62 | 9.5 | 3.66 | 3.51 | 0.7 | 93.9 |
| 17 | Boron-cobalt-titanium | 17000 | 1 : 1 : 0.4 | 1.71 | 9.5 | 3.7 | 3.55 | 0.69 | 93.8 |
| 18 | Boron-cobalt-titanium | 20000 | 1 : 1 : 0.4 | 1.76 | 9.5 | 3.71 | 3.56 | 0.68 | 93.5 |
| 19 | Boron-cobalt-hafnium | 15000 | 1 : 0.5 : 0.04 | 1.55 | 9.5 | 3.66 | 3.47 | 0.69 | 92.2 |
| 20 | Boron-cobalt-hafnium | 15000 | 1 : 0.5 : 0.15 | 1.58 | 9.5 | 3.67 | 3.5 | 0.7 | 93.1 |
| 21 | Boron-cobalt-hafnium | 15000 | 1 : 1 1 | 1.75 | 9.5 | 3.69 | 3.57 | 0.7 | 93.8 |
| 22 | Boron-cobalt-hafnium | 15000 | 1 : 1 : 3 | 1.80 | 9.5 | 3.66 | 3.57 | 0.68 | 93.6 |
| 23 | Boron-cobalt-hafnium | 15000 | 1 : 5 : 4 | 1.69 | 9.5 | 3.65 | 3.56 | 0.75 | 93.4 |
| 24 | Boron-hafnium-titanium oxide | 15000 | 1 : 0.5 : 0.03 | 1.55 | 9.5 | 3.65 | 3.47 | 0.7 | 92.1 |
| 25 | Boron-hafnium-titanium oxide | 15000 | 1 : 0.5 : 0.15 | 1.63 | 9.5 | 3.65 | 3.52 | 0.7 | 92.7 |
| 26 | Boron-hafnium-titanium oxide | 15000 | 1 : 0.5 : 1 | 1.81 | 9.5 | 3.68 | 3.56 | 0.66 | 93.4 |
| 27 | Boron-hafnium-titanium oxide | 15000 | 1 : 0.5 : 3 | 1.87 | 9.5 | 3.69 | 3.58 | 0.72 | 93.5 |
| 28 | Boron-cobalt-titanium | 15000 | 1 : 1 : 0.4 | 1.52 | 9.5 | 3.65 | 3.46 | 0.69 | 93.5 |
| 39 | Boron-cobalt-titanium | 15000 | 1 : 1 : 0.4 | 1.63 | 9.5 | 3.71 | 3.53 | 0.73 | 93.8 |
| 30 | Boron-cobalt-titanium | 15000 | 1 : 1 : 0.4 | 1.56 | 9.5 | 3.69 | 3.48 | 0.71 | 93.6 |
| 31 | Boron-cobalt-titanium | 15000 | 1 : 1 : 0.4 | 1.64 | 9.5 | 3.65 | 3.52 | 0.7 | 93.8 |
| 32 | Boron-cobalt-titanium | 15000 | 1 : 1 : 0.4 | 1.69 | 9.5 | 3.69 | 3.55 | 0.73 | 93.8 |
| 33 | Boron-cobalt-titanium | 15000 | 1 : 1 : 0.4 | 1.82 | 9.5 | 3.72 | 3.57 | 0.69 | 94 |
| 34 | Boron-cobalt-titanium | 15000 | 1 : 1 : 0.4 | 1.71 | 10 | 3.7 | 3.55 | 0.7 | 94.1 |
| 35 | Boron-cobalt-titanium | 15000 | 1 : 1 : 0.4 | 1.69 | 10 | 3.71 | 3.55 | 0.72 | 96.5 |
| Comparative example 1 | - | - | - | 1.46 | 9.5 | 3.6 | 3.38 | 0.72 | 88.7 |
| Comparative example 2 | Boron-cobalt-titanium | 15000 | 1 : 1 : 0.4 | 1.49 | 9.5 | 3.63 | 3.43 | 0.69 | 93.9 |

| | | | | | | | | | |
|---|---|---|---|---|---|---|---|---|---|
| ¹ The amount of the coating layer is based on the weight of the matrix material. ² SPAN is (Dv90 - Dv10)/Dv50. | | | | | | | | | |

**Table 2 Relevant parameters of positive electrode active materials, performance of positive electrode plates, and performance of secondary batteries**

| Example No. | Positive electrode active material | | | Positive electrode plate | | | Performance of secondary battery |
|---|---|---|---|---|---|---|---|
| | Dv50 of first positive electrode active material (µm) | Dv50 of second positive electrode active material (µm) | Mass ratio³ | Ratio in amount⁴ | Compacted density of electrode plate (g/cm³) | Extension rate (%) | Capacity retention rate after storage at 60°C (%) |
| 36 | 9.5 | 3 | 1 : 1 | 6.1 : 3.9 | 3.73 | 0.69 | 94.5 |
| 37 | 9.5 | 3 | 2 : 1 | 6.9 : 3.1 | 3.69 | 0.7 | 94.8 |
| 38 | 9.5 | 3 | 3 : 1 | 7.6 : 2.4 | 3.65 | 0.7 | 94.6 |
| 39 | 9.5 | 3 | 4 : 1 | 8.3 : 1.7 | 3.6 | 0.72 | 94.3 |
| 40 | 9.5 | 3 | 8.5 : 1.5 | 8.9 : 1.1 | 3.58 | 0.7 | 94 |

| | | | | | | | |
|---|---|---|---|---|---|---|---|
| ³ The mass ratio of a first positive electrode active material to a second positive electrode active material. ⁴ The ratio in amount of a first positive electrode active material to a second positive electrode active material in a positive electrode plate. | | | | | | | |

As can be seen from the above, 1) compared with the uncoated high-nickel positive electrode material in comparative example 1 (i.e., a high-nickel positive electrode material in the prior art), the positive electrode active materials of the present application, by using a boron-containing ternary alloy or a boron-containing ternary alloy oxide to achieve dual coating effects of both the surface and the grain boundaries of a matrix material, greatly improves the surface-structure stability of the material, such that the high-temperature storage performance of a secondary battery is significantly improved; and 2) compared with the high-nickel positive electrode material without water washing and vibration drying processes in comparative example 2 (i.e., a material only being coated, without subsequent water washing and vibration drying processes), the positive electrode active materials of the present application have better dispersity and a high filling degree between particles, which enables an electrode plate to have not only a high compacted density but also a small extension rate, such that the processability of a positive electrode plate is greatly improved. In addition, the results of examples 36-40 show that when a positive electrode active material in the first aspect of the present application is used as a first positive electrode active material and is used in combination with a second positive electrode active material (with a Dv50 of 3 µm) having a smaller particle size, the second positive electrode active material having a smaller particle size can effectively fill the pores of the first positive electrode active material having a larger particle size, thereby further improving the processability of an electrode plate.

It should be noted that the present application is not limited to the above embodiments. The above embodiments are exemplary only, and any embodiment that has substantially the same constitutions as the technical ideas and has the same effects within the scope of the technical solution of the present application falls within the technical scope of the present application. In addition, without departing from the gist of the present application, various modifications that are made to the embodiments and are conceivable to those skilled in the art, and other modes constructed by combining some of the constituent elements of the embodiments also fall within the scope of the present application.

## Claims

1. A positive electrode active material, comprising a matrix material and a coating layer on the surface of the matrix material, wherein
the matrix material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a, and
the coating layer is a boron-containing ternary alloy or a boron-containing ternary alloy oxide.

2. The positive electrode active material according to claim 1, wherein the boron-containing ternary alloy is represented by formula I: B-X1-X2 (I),
wherein X1 and X2 are, independently of each other, selected from one of the following elements: cobalt, hafnium, niobium, titanium, zirconium, tungsten, aluminum, molybdenum and copper; and
the boron-containing ternary alloy oxide is represented by formula II: B-Y1-Y2-O (II),
wherein Y1 and Y2 are, independently of each other, selected from one of the following elements: cobalt, hafnium, niobium, titanium, zirconium, tungsten, aluminum, molybdenum and copper.

3. The positive electrode active material according to claim 1, wherein the positive electrode active material satisfies: 1.30 ≤ (Dv90 - Dv10)/Dv50 ≤ 2.10.

4. The positive electrode active material according to claim 1 or 2, wherein the amount of the coating layer is 500 ppm - 20000 ppm, and optionally the amount of the coating layer is 4000-15000 ppm, based on the weight of the matrix material.

5. The positive electrode active material according to claim 1 or 2, wherein the boron-containing ternary alloy is selected from at least one of boron-cobalt-hafnium, boron-cobalt-niobium, boron-cobalt-titanium, boron-cobalt-zirconium, boron-cobalt-tungsten, boron-cobalt-aluminum, boron-cobalt-molybdenum, boron-cobalt-copper, and boron-hafnium-titanium, and optionally the boron-containing ternary alloy is selected from at least one of boron-cobalt-hafnium, boron-cobalt-niobium, boron-cobalt-titanium, boron-cobalt-tungsten, boron-cobalt-aluminum, and boron-hafnium-titanium.

6. The positive electrode active material according to claim 1 or 2, wherein the boron-containing ternary alloy oxide is selected from at least one of a boron-cobalt-hafnium oxide, a boron-cobalt-niobium oxide, a boron-cobalt-titanium oxide, a boron-cobalt-zirconium oxide, a boron-cobalt-tungsten oxide, a boron-cobalt-aluminum oxide, a boron-cobalt-molybdenum oxide, a boron-cobalt-copper oxide, and a boron-hafnium-titanium oxide, and optionally the boron-containing ternary alloy oxide is selected from at least one of a boron-cobalt-hafnium oxide, a boron-cobalt-niobium oxide, a boron-cobalt-titanium oxide, a boron-cobalt-tungsten oxide, a boron-cobalt-aluminum oxide, and a boron-hafnium-titanium oxide.

7. The positive electrode active material according to claim 1 or 2, wherein the molar ratio of boron, X1 to X2 in the boron-containing ternary alloy is 1 : 0.5 : 0.04 - 1 : 5 : 4, optionally 1 : 0.5 : 0.15 - 1 : 1 : 0.4.

8. The positive electrode active material according to claim 1 or 2, wherein the molar ratio of boron, Y1 to Y2 in the boron-containing ternary alloy oxide is 1 : 0.5 : 0.03 - 1 : 5 : 5, optionally 1 : 0.5 : 0.15 - 1 : 1 : 0.4.

9. The positive electrode active material according to claim 1 or 2, wherein the positive electrode active material has a Dv50 of 6 µm - 18 µm, optionally 9 µm - 13 µm.

10. The positive electrode active material according to claim 1 or 2, wherein the positive electrode active material has a compacted density of 3.65-3.75 g/cm³ under a pressure of 5 T.

11. A method for preparing a positive electrode active material according to any one of claims 1-10, **characterized by** comprising
S1) preparing a matrix material;
S2) mixing the matrix material, a boron-containing compound and a metal elementary substance at a mass ratio of 1 : 0.004-0.02 : 0.0001-0.2, or mixing the matrix material, a boron-containing compound and a metal oxide at a mass ratio of 1 : 0.004-0.02 : 0.0002-0.018, and then sintering same under an inert atmosphere or oxygen atmosphere to obtain an intermediate material; and
S3) washing the intermediate material with water, followed by centrifugation, filtration and then vibration drying to obtain the positive electrode active material,
wherein the matrix material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a.

12. The preparation method according to claim 11, wherein the boron-containing compound is one or more selected from cobalt boride, hafnium boride, niobium boride, titanium boride, zirconium boride, tungsten boride, aluminum boride, molybdenum boride, and copper boride, and/or
the metal elementary substance is selected from one or more of cobalt, hafnium, niobium, titanium, zirconium, tungsten, aluminum, molybdenum and copper, and/or
the metal oxide is selected from one or more of cobalt oxide, hafnium oxide, niobium oxide, titanium oxide, zirconium oxide, tungsten oxide, aluminum oxide, molybdenum oxide, and copper oxide.

13. The preparation method according to claim 11 or 12, wherein the matrix material prepared in step S1) has a (Dv90 - Dv10)/Dv50 ≥ 1.2, optionally (Dv90 - Dv10)/Dv50 ≥ 1.25.

14. The preparation method according to claim 11 or 12, wherein in step S2), the matrix material, a boron-containing compound and a metal elementary substance are mixed under an inert atmosphere and sintered under an inert atmosphere, wherein the sintering temperature is 300-700°C, optionally 300-550°C, and the sintering time is 3-10 h, optionally 5-10 h.

15. The preparation method according to claim 11 or 12, wherein in step S2), the matrix material, a boron-containing compound and a metal oxide are sintered under an oxygen atmosphere, wherein the sintering temperature is 300-700°C, optionally 550-650°C, and the sintering time is 3-10 h, optionally 3-8 h.

16. The preparation method according to claim 11 or 12, wherein in step S3), the mass ratio of the intermediate material to water is 1 : 1 - 1 : 5, the duration of water washing is 1-10 min, the vibration frequency of the vibration drying is 10-50 Hz, and the drying time is 2-8 h.

17. A positive electrode plate, wherein the positive electrode plate comprises a positive electrode current collector and a positive electrode film layer provided on at least one surface of the positive electrode current collector, wherein the positive electrode film layer comprises a first positive electrode active material, the first positive electrode active material is a positive electrode active material according to any one of claims 1-10 or a positive electrode active material prepared by the method according to any one of claims 11-16, and the content of the first positive electrode active material in the positive electrode film layer is 10 wt% or more, based on the total weight of the positive electrode film layer.

18. The positive electrode plate according to claim 17, wherein the positive electrode film layer further comprises a second positive electrode active material, and the ratio in amount of the first positive electrode active material to the second positive electrode active material is 6 : 4 - 8 : 2, optionally 6.5 : 3.5 - 7.5 : 2.5;
the second positive electrode active material has a chemical formula of LiNiₓCo_{y}Mn_{z}MₐM'_{b}O₂, wherein M = at least one of Zr, Y, Al, Ti, W, Sr, Ta, Sb, Nb, Na, K, Ca or Ce, M' = at least one of N, F, S or Cl, 0.80 ≤ x ≤ 1.0, 0 ≤ y ≤ 0.20, 0 ≤ z ≤ 0.02, 0 ≤ a ≤ 0.02, and b = 1-x-y-z-a; and the second positive electrode active material has a Dv50 of 2 µm - 5 µm, optionally 2.5 µm - 3.5 µm.

19. The positive electrode plate according to claim 18, wherein the second positive electrode active material has a tap density of ≤ 1.8 g/cm³, optionally 1.2-1.5 g/cm³.

20. A secondary battery, comprising a positive electrode plate according to any one of claims 17-19.

21. A battery module, comprising a secondary battery according to claim 20.

22. A battery pack, comprising a battery module according to claim 21.

23. A power consuming device, comprising at least one of a secondary battery according to claim 20, a battery module according to claim 21, or a battery pack according to claim 22.
